# EUROPÄISCHE PATENTSCHRIFT

(11) **EP 3 308 192 B1**
(45) Veröffentlichungstag und Bekanntmachung des Hinweises auf die Patenterteilung: **03.05.2023**
(21) Anmeldenummer: 16729536.9
(22) Anmeldetag: 09.06.2016
(51) Int. Cl.: G01S 7/40, G01S 13/93, H04L 12/40, G01S 13/931

(54) **VERFAHREN ZUM BESTIMMEN EINER VERBAUPOSITION EINER SENSOREINHEIT, KOMMUNIKATIONSSYSTEM UND KRAFTFAHRZEUG**
METHOD FOR DETERMINING AN INSTALLATION POSITION OF A SENSOR UNIT, COMMUNICATION SYSTEM, AND MOTOR VEHICLE
PROCÉDÉ POUR DÉTERMINER UNE POSITION DE MONTAGE D'UNE UNITÉ CAPTEUR, SYSTÈME DE COMMUNICATION ET VÉHICULE À MOTEUR

(30) Priorität: 10.06.2015 DE 102015109169
(43) Veröffentlichungstag der Anmeldung: 18.04.2018
(73) Patentinhaber: Valeo Schalter und Sensoren GmbH, 74321 Bietigheim-Bissingen (DE)
(72) Erfinder: BRANDT, Timo, 74321 Bietigheim-Bissingen (DE)
(74) Vertreter: Withopf, Kristina
(86) Internationale Anmeldenummer: PCT/EP2016/063162
(87) Internationale Veröffentlichungsnummer: WO 2016/198524

(56) Entgegenhaltungen:
- EP-A1- 1 455 278
- DE-A1-102005 055 964
- DE-A1-102006 025 174
- DE-A1-102011 012 379
- DE-B3-102006 012 237

## Beschreibung

Die Erfindung betrifft ein Verfahren zum Bestimmen einer Verbauposition zumindest einer Sensoreinheit eines Kommunikationssystems eines Kraftfahrzeugs. Die Sensoreinheit ist zum Erfassen eines Umgebungsbereichs des Kraftfahrzeugs ausgebildet. Es wird die Sensoreinheit mit einer Anschlussstelle des Kommunikationssystems des Kraftfahrzeugs verbunden. Die Erfindung betrifft auch ein Kommunikationssystem für ein Kraftfahrzeug, wie auch ein Kraftfahrzeug mit einem Kommunikationssystem.

Verfahren zum Bestimmen einer Verbauposition einer Sensoreinheit sind aus dem Stand der Technik bekannt. So wird in der US 6,119,067 A ein Verfahren zum Bestimmen der korrekten Einbaulage eines Kraftfahrzeugs beschrieben.

DE 10 2006 025174 A1, DE 10 2006 012237 B3 und DE 10 2005 055964 A1 offenbaren den Oberbegriff des Anspruchs 1.

Weiterhin ist aus dem Stand der Technik ein Verfahren zum Bestimmen einer Verbauposition einer Sensoreinheit eines Kraftfahrzeugs bekannt, bei welchem Verbaucodierungen in Form von Steckercodierungen verwendet werden. Für die Codierung von vier unterschiedlichen Verbaupositionen von vier identischen Sensoreinheiten werden üblicherweise zwei zusätzliche Pins im Stecker der Sensoreinheit benötigt. Nachteilig an der Steckercodierung sind die durch die zusätzlichen Pins erhöhten Kosten und der erhöhte Platzbedarf für den Stecker der Sensoreinheit.

Es ist Aufgabe der Erfindung, ein Verfahren, ein Kommunikationssystem sowie ein Kraftfahrzeug bereitzustellen, mit welchen beziehungsweise bei welchen eine Verbauposition einer Sensoreinheit an einem Kraftfahrzeug mit weniger Materialeinsatz bestimmt werden kann.

Diese Aufgabe wird erfindungsgemäß durch ein Verfahren, durch ein Kommunikationssystem sowie durch ein Kraftfahrzeug mit den Merkmalen gemäß den jeweiligen unabhängigen Ansprüchen gelöst.

Bei einem erfindungsgemäßen Verfahren wird eine Verbauposition zumindest einer Sensoreinheit eines Kommunikationssystems eines Kraftfahrzeugs bestimmt. Die Sensoreinheit ist zum Erfassen eines Umgebungsbereichs des Kraftfahrzeugs ausgebildet. Als ein wesentlicher Gedanke der Erfindung ist vorgesehen, dass das Kommunikationssystem mit der eine Verbauposition charakterisierenden Anschlussstelle für die Sensoreinheit und mit zumindest einer eine weitere Verbauposition charakterisierenden weiteren Anschlussstelle für die Sensoreinheit ausgebildet wird. Die Sensoreinheit kann kompatibel an die Anschlussstelle oder die weitere Anschlussstelle angeschlossen werden. Abhängig davon, an welcher Anschlussstelle die Sensoreinheit angeschlossen wird, wird der Sensoreinheit automatisch eine diese konkrete Verbauposition charakterisierende Information durch das Kommunikationssystem bereitgestellt.

Durch das automatische Bereitstellen der diese konkrete Verbauposition beziehungsweise Einbauposition charakterisierenden Information durch das Kommunikationssystem kann die Verbauposition einfacher und mit weniger Materialaufwand bestimmt werden. Die Sensoreinheit selbst erkennt dann, an welcher Verbauposition im Kommunikationssystem und dadurch auch am Kraftfahrzeug sie verbaut wurde. Gerade durch die Ausgestaltung der Sensoreinheit dahingehend, dass sie kompatibel an die alternativ zur Verfügung stehenden Anschlussstellen angeschlossen werden kann, ist dies ein Vorteil beim Verbau und der Montage einhergehend. Es muss nicht mehr erst geprüft werden, an welcher Anschlussstelle eine Sensoreinheit überhaupt verbaut werden kann, sondern diese Vorgabe ist aufgehoben. Die Sensoreinheit kann überall verbaut werden. Um dabei dann wiederum die Verbauposition dennoch zu wissen, wird das Selbsterkennungsverfahren der Verbauposition durchgeführt.

Insbesondere kann die Verbauposition also anhand der Topologie des Kommunikationssystems bestimmt werden. Auf die Verwendung von Codierpins zum Bestimmen der Verbauposition kann dann verzichtet werden. Vorgesehen ist also, dass der Sensoreinheit abhängig von der Anschlussstelle, an welcher die Sensoreinheit angeschlossen wird, die für die Anschlussstelle vorgesehene und die konkrete Verbauposition charakterisierende Information bereitgestellt wird. Die Sensoreinheit kann also nun anhand der bereitgestellten charakterisierenden Information ermitteln, an welcher Verbauposition die Sensoreinheit verbaut ist.

Die Sensoreinheit kann beispielsweise zwei Steckerschnittstellen aufweisen. Eine Steckerschnittstelle kann beispielsweise als CAN-Schnittstelle ausgebildet sein, während eine andere Steckerschnittstelle als Flexray-Schnittstelle ausgebildet sein kann. Je nachdem, in welcher Kombination welche charakterisierende Information an den Steckerschnittstellen von der Sensoreinheit empfangen wird, kann dann die Verbauposition und/oder ein fehlerhafter Betriebszustand des Kommunikationssystems bestimmt werden. Des Weiteren kann durch diese multiple Anschlussmöglichkeit an der Sensoreinheit selbst, eine hochflexible und kommunikationstechnisch variable Einsatzmöglichkeit einer Sensoreinheit in einem vielfältig gestaltbarem Kommunikationssystem erfolgen. Gerade dann, wenn das Kommunikationssystem zumindest eine Subsystem mit mehreren Sensoreinheiten aufweist, können diesen dann individuell verknüpft werden und in dem Subsystem miteinander kommunizieren.

Vorzugsweise ist es vorgesehen, dass durch die Sensoreinheit nach dem Einschalten der Sensoreinheit überprüft wird, ob bereits eine Konfigurationseinstellung innerhalb der Sensoreinheit für die jeweilige Verbauposition vorhanden ist, und falls die Konfigurationseinstellung vorhanden ist, das, insbesondere automatische, Bestimmen der Verbauposition bei dem Einschaltvorgang übersprungen wird. Durch die Konfigurationseinstellung wird beispielsweise eine Aufgabencodierung der Sensoreinheit für die jeweilige Verbauposition vorgegeben. Die Konfigurationseinstellung kann beispielsweise durch einen Eintrag in einem nicht flüchtigen Speicher der Sensoreinheit, insbesondere einem EEPROM (electrically erasable programmable read only memory) oder einem emulierten EEPROM abgelegt werden. Durch die Konfigurationseinstellung wird der Sensoreinheit beispielsweise mitgeteilt, wie die erfassten Sensordaten verbaupositionsspezifisch weiterverarbeitet werden sollen. Durch die Konfigurationseinstellung kann aber beispielsweise auch vorgegeben werden, wie die Sensoreinheit mit dem Kommunikationssystem und/oder anderen Sensoreinheiten kommunizieren soll. Wird also beispielsweise erkannt, dass die Konfigurationseinstellung vorhanden ist und die gleiche Konfigurationseinstellung beispielsweise auch nicht doppelt durch eine andere Sensoreinheit bereitgestellt wird, so kann das Bestimmen der Verbauposition bei dem Einschaltvorgang der Sensoreinheit und/oder des Kommunikationssystems übersprungen werden.

Erfindungsgemäß ist vorgesehen, dass eine Zuordnung der diese konkrete Verbauposition charakterisierende Information zum Identifizieren der konkreten Verbauposition durch die Sensoreinheit durchgeführt wird. So erhält die Sensoreinheit also über die Anschlussstelle, an welcher die Sensoreinheit angeschlossen ist, die diese konkrete Verbauposition charakterisierende Information und kann dann beispielsweise in einer Datenbank der Sensoreinheit nachsehen, welche der in der Datenbank hinterlegten Verbaupositionen zu dieser charakterisierenden Information passen. Somit kann die Zuordnung der konkreten Verbauposition anhand der charakterisierenden Information durch die Sensoreinheit selbst durchgeführt werden.

Weiterhin ist es erfindungsgemäß vorgesehen, dass eine Anschlussstelle als erste Anschlussstelle vorgegeben wird, die mit einem Hauptbus, insbesondere einem Haupt-CAN-Bus, des Kommunikationssystems direkt verbunden wird und als charakterisierende Information einer ersten Verbauposition ein erstes Hauptbussignal an die an die erste Anschlussstelle angeschlossene Sensoreinheit übermittelt wird. Die Verbindung der ersten Anschlussstelle mit dem Hauptbus kann beispielsweise mit 500 kBit/s bereitgestellt werden. Durch den Anschluss an den Hauptbus wird das Hauptbussignal für die an die erste Anschlussstelle angeschlossene Sensoreinheit bereitgestellt und die Sensoreinheit kann die Zuordnung zu der ersten Verbauposition anhand des Hauptbussignals vornehmen. Das Hauptbussignal selbst stellt insbesondere die charakterisierende Information dar.

Es ist also nicht mehr nötig, dass die Sensoreinheit über Codierpins erkennt, dass sie an der ersten Anschlussstelle angeschlossen ist. Die Sensoreinheit weist auch keine derartigen Codierpins mehr auf.

Erfindungsgemäß ist es vorgesehen, dass als eine weitere Anschlussstelle eine zweite Anschlussstelle ohne direkte Verbindung zu einem Hauptbus des Kommunikationssystems vorgegeben wird, und als charakterisierende Information einer zweiten Verbauposition ein erstes Signal eines, insbesondere direkt mit der zweiten Anschlussstelle verbundenen, Steuergeräts des Kommunikationssystems an die angeschlossene Sensoreinheit übermittelt wird. Das Steuergerät kann in vielfältiger Ausgestaltung vorliegen und ist insbesondere dazu ausgebildet das erste Signal auszusenden. Das erste Signal wird insbesondere als ein CAN-L-Signal (Fahrerassistenzsystem links) bereitgestellt. Das erste Signal selbst stellt insbesondere die charakterisierende Information dar. So ist das erste Signal insbesondere eine eindeutige aktive Kennbotschaft. Falls also das Steuergerät, welches an der zweiten Anschlussstelle angeschlossen ist, das erste Signal übermittelt bekommt, so kann dieses anhand des ersten Signals eine Zuordnung zu der zweiten Verbauposition vornehmen.

Weiterhin kann es vorgesehen sein, dass als eine weitere Anschlussstelle eine dritte Anschlussstelle ohne direkte Verbindung zu einem Hauptbus des Kommunikationssystems vorgegeben wird, und als charakterisierende Information einer dritten Verbauposition ein zweites Signal eines, insbesondere direkt mit der dritten Anschlussstelle verbundenen, Steuergeräts des Kommunikationssystems an die angeschlossene Sensoreinheit übermittelt wird.

Auch hier stellt das zweite Signal selbst insbesondere die charakterisierende Information dar. Der Inhalt des Signals ist auch hier insbesondere nicht die charakteristische Information als solche.

Das Steuergerät kann wiederum vielfältig ausgebildet sein, insbesondere allerdings so, dass das zweite Signal ausgesendet werden kann. Das zweite Signal wird insbesondere als CAN-R-Signal (Fahrerassistenzsystem rechts) bereitgestellt. So kann durch das zweite Signal wiederum eine eindeutige aktive Kennbotschaft übermittelt werden. Das zweite Signal dient der an die dritte Anschlussstelle angeschlossenen Sensoreinheit also zur eindeutigen Zuordnung der dritten Verbauposition.

Erfindungsgemäß ist es vorgesehen, dass das erste Signal und/oder das zweite Signal über einen von dem Hauptbus unterschiedlichen Nebenbus des Kommunikationssystems übermittelt werden. Der Nebenbus wird beispielsweise durch einen CAN-x-Bus (Fahrerassistenzsystem x) gebildet. Durch den Nebenbus wird die Sensoreinheit an der zweiten Anschlussstelle und/oder der dritten Anschlussstelle mit dem Steuergerät verbunden. Der Nebenbus kann beispielsweise eine Übertragungsrate von 500 kBit/s bereitstellen. Durch den Nebenbus können mittels des ersten Signals und/oder des zweiten Signals individuelle, eindeutig zuordenbare Kennbotschaften an die jeweils angeschlossenen Sensoreinheiten übermittelt werden.

Weiterhin kann es vorgesehen sein, dass zum Bestimmen einer zweiten Verbauposition als charakterisierende Information ein Signal durch die Sensoreinheit erhalten wird, welches über einen von dem Hauptbus unterschiedlichen ersten Nebenbus des Kommunikationssystems bereitgestellt wird, mit welchem die Sensoreinheit direkt verbunden wird. Der erste Nebenbus kann beispielsweise als CAN-L-Bus ausgebildet sein. So kann die zweite Verbauposition dadurch erkannt werden, das ein Signal über genau diesen spezifischen Nebenbus erhalten wird. Bei dieser Ausführung ist somit die charakteristische Information auch darin liegend, dass anhand der Tatsache, über welchen spezifischen Nebenbus ein Signal erhalten wird, die Verbauposition erkannt wird. Als das Signal wird insbesondere das erste Signal erhalten.

Weiterhin kann es vorgesehen sein, dass zum Bestimmen einer dritten Verbauposition als charakterisierende Information ein Signal durch die Sensoreinheit erhalten wird, welches über einen von dem Hauptbus unterschiedlichen zweiten Nebenbus des Kommunikationssystems bereitgestellt wird, mit welchem die Sensoreinheit direkt verbunden wird. Der zweite Nebenbus kann beispielsweise als CAN-R-Bus bereitgestellt werden. Insbesondere verbindet der zweite Nebenbus das Steuergerät mit der an die dritte Anschlussstelle angeschlossenen Sensoreinheit. Auch bei dieser Ausführung ist somit die charakteristische Information auch darin liegend, dass anhand der Tatsache, über welchen spezifischen Nebenbus ein Signal erhalten wird, die Verbauposition erkannt wird. Durch den zweiten Nebenbus kann die dritte Verbauposition also wiederum einfach und eindeutig bestimmt werden.

Weiter kann es vorgesehen sein, dass als eine weitere Anschlussstelle eine vierte Anschlussstelle ohne direkte Verbindung zu einem Hauptbus des Kommunikationssystems bereitgestellt wird, und als bereitgestellte charakterisierende Information einer vierten Verbauposition durch die Sensoreinheit für eine vorbestimmte Zeitspanne erfolglos auf ein Signal von dem Hauptbus und ein Signal von einem Steuergerät des Kommunikationssystems gewartet wird. So kann die Sensoreinheit die Zuordnung zu der vierten Verbauposition vornehmen, falls für die vorbestimmte Zeitspanne erfolglos auf das Signal von dem Hauptbus und das Signal von dem Steuergerät gewartet wird. Da diese vierte Anschlussstelle, bei welcher erfolglos auf das Signal von dem Hauptbus und das Signal von dem Steuergerät gewartet wird, vorzugsweise nur ein einziges Mal hinsichtlich der anderen Anschlussstellen vorkommt, kann dadurch eindeutig die vierte Verbauposition, insbesondere durch die Sensoreinheit, zugeordnet werden. Das erfolglose Warten für die vorbestimmte Zeitspanne kann auch als Time-out beschrieben werden. Die charakteristische Information hierbei ist es also, dass kein Signal von dem Hauptbus übermittelt wird.

Weiterhin ist es vorzugsweise vorgesehen, dass zumindest zwei Sensoreinheiten in einem Kommunikationssubsystem des Kommunikationssystems über einen weiteren Nebenbus, insbesondere einen Flexray-Bus, direkt miteinander kommunizieren, insbesondere vier Sensoreinheiten in dem Subsystem angeschlossen werden, die jeweils zumindest paarweise mit jeweils einem weiteren Nebenbus direkt verbunden sind und über den jeweiligen Nebenbus kommunizieren. So wird durch den weiteren Nebenbus vorzugsweise ein privates Netzwerk zwischen den Sensoreinheiten selbst aufgebaut. So ist es beispielsweise ausreichend, wenn nur eine der Sensoreinheiten an den Hauptbus angeschlossen ist, und die anderen Sensoreinheiten können über den weiteren Nebenbus mit der an den Hauptbus angeschlossenen Sensoreinheit kommunizieren und somit erfasste Sensordaten über die an den Hauptbus angeschlossene Sensoreinheit an den Hauptbus weiterleiten lassen. Durch das Subsystem wird es also insbesondere auch möglich, dass für jede der Anschlussstellen die die jeweilige Verbauposition charakterisierende Information bereitgestellt werden kann.

Insbesondere ist es vorgesehen, dass das Bestimmen der Verbauposition erneut durchgeführt wird, falls die Sensoreinheit aus einer spezifischen Verbauposition ausgebaut wird und nachfolgend wieder in eine Verbauposition eingebaut wird oder eine neue Sensoreinheit in eine Verbauposition verbaut wird. Vorteilhaft ist dies, weil dadurch bei einem Ausbau der Sensoreinheit nicht darauf geachtet werden muss, an welcher Verbauposition diese Sensoreinheit ursprünglich gewesen ist. Es ist somit möglich, die ausgebaute Sensoreinheit an einer beliebigen Verbauposition einzubauen und das Bestimmen der Verbauposition wird schließlich erneut durchgeführt. Somit können bei dem Einbau der Sensoreinheiten keine falschen Zuordnungen der Verbaupositionen entstehen, da das Bestimmen der Verbaupositionen für diesen Fall erneut, insbesondere automatisch, durchgeführt wird. Somit kann also auch die Robustheit des Kommunikationssystems erhöht werden.

Die Erfindung betrifft auch ein Kommunikationssystem für ein Kraftfahrzeug, mit zumindest einer Sensoreinheit, welche zum Erfassen eines Umgebungsbereichs des Kraftfahrzeugs ausgebildet ist, wobei das Kommunikationssystem mit der eine Verbauposition charakterisierenden Anschlussstelle für die Sensoreinheit und mit zumindest einer eine weitere Verbauposition charakterisierenden weiteren Anschlussstelle für die Sensoreinheit ausgebildet ist, und die Sensoreinheit kompatibel an die Anschlussstelle oder die weitere Anschlussstelle anschließbar ist, und das Kommunikationssystem dazu ausgebildet ist, eine Verbauposition der zumindest einen Sensoreinheit nach einem erfindungsgemäßen Verfahren zu bestimmen.

Vorzugsweise ist es vorgesehen, dass die jeweilige Sensoreinheit einen Sensor, insbesondere einen Radarsensor, und eine korrespondierende Steuereinheit umfasst. Die Steuereinheit kann dabei beispielsweise in den Sensor integriert sein. Ergänzend oder alternativ kann die Steuereinheit aber auch bezüglich des Sensors als separate Einheit ausgebildet sein.

Zudem betrifft die Erfindung ein Kraftfahrzeug mit einem erfindungsgemäßen Kommunikationssystem.

Die mit Bezug auf das erfindungsgemäße Verfahren vorgestellten bevorzugten Ausführungsformen und deren Vorteile gelten entsprechend für das erfindungsgemäße Kommunikationssystem sowie für das erfindungsgemäße Kraftfahrzeug.

Mit Angaben "oben", "unten", "vorne", "hinten", "horizontal", "vertikal" etc. sind die bei bestimmungsgemäßem Gebrauch und bestimmungsgemäßem Anordnen der Sensoreinheit gegebenen Positionen und Orientierungen angegeben.

Weitere Merkmale der Erfindung ergeben sich aus den Ansprüchen, den Figuren und der Figurenbeschreibung.

Die Ausführungsbeispiele der Erfindung werden nachfolgend anhand schematischer Zeichnungen näher erläutert.

Dabei zeigen:
- Fig. 1: eine schematische Draufsicht auf ein erfindungsgemäßes Kraftfahrzeug mit einem Kommunikationssystem;
- Fig. 2: eine schematische Darstellung des Kommunikationssystems mit vier Sensoreinheiten an vier Verbaupositionen;
- Fig. 3: eine schematische Darstellung des Kommunikationssystems mit einer Unterbrechung bei einem weiteren Nebenbus;
- Fig. 4: eine schematische Darstellung des Kommunikationssystems mit vertauschten Sensoreinheiten an einer zweiten Anschlussstelle und einer dritten Anschlussstelle des Kommunikationssystems;
- Fig. 5: eine schematische Darstellung des Kommunikationssystems mit vertauschten Sensoreinheiten an einer ersten Anschlussstelle und einer vierten Anschlussstelle des Kommunikationssystems;
- Fig. 6: eine schematische Darstellung des Kommunikationssystems mit vertauschten Sensoreinheiten an der ersten Anschlussstelle und der zweiten Anschlussstelle;
- Fig. 7: eine schematische Darstellung des Kommunikationssystems mit vertauschten Sensoreinheiten an der dritten Anschlussstelle und der vierten Anschlussstelle; und
- Fig. 8: eine weitere schematische Darstellung des Kommunikationssystems mit einer defekten Sensoreinheit an der ersten Anschlussstelle.

In den Figuren werden gleiche oder funktionsgleiche Elemente mit den gleichen Bezugszeichen versehen.

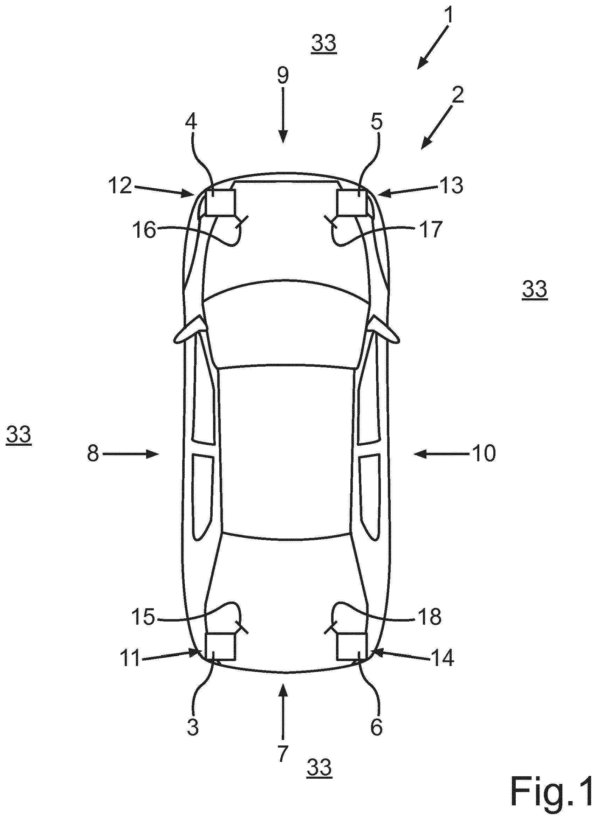

In Fig. 1 ist schematisch ein Kraftfahrzeug 1 mit einem Kommunikationssystem 2 dargestellt. Das Kommunikationssystem 2 umfasst eine erste Sensoreinheit 3, eine zweite Sensoreinheit 4, eine dritte Sensoreinheit 5 und eine vierte Sensoreinheit 6. Die Sensoreinheiten 3, 4, 5, 6 umfassen vorzugsweise jeweils einen Sensor und eine sensorseitige Steuereinheit. Der Sensor und die Steuereinheit einer Sensoreinheit können ineinander integriert als eine Einheit ausgebildet sein, jedoch können der Sensor und die Steuereinheit auch als zueinander separate Einheiten vorliegen. Die Sensoren sind insbesondere als Radarsensoren ausgebildet. Die Sensoreinheiten 3 bis 6 sind zum zumindest teilweisen Erfassen eines Umgebungsbereichs 33 des Kraftfahrzeugs 1 ausgebildet und entsprechend an dem Kraftfahrzeug 1 angeordnet.

Gemäß dem Ausführungsbeispiel ist die erste Sensoreinheit 3 an einem Heck 7 des Kraftfahrzeugs 1 und auf einer, bei im Kraftfahrzeug 1 sitzenden und in Vorwärtsfahrtrichtung blickenden Insassen, linken Seite 8 des Kraftfahrzeugs 1 angeordnet, also in einem linken hinteren Eckbereich. Die zweite Sensoreinheit 4 ist gemäß dem Ausführungsbeispiel an einer Front 9 des Kraftfahrzeugs 1 und der linken Seite 8 angeordnet, also in einem vorderen linken Eckbereich. Weiterhin ist die dritte Sensoreinheit 5 an der Front 9 und einer rechten Seite 10 des Kraftfahrzeugs 1 angeordnet, also an einem vorderen rechten Eckbereich. Die vierte Sensoreinheit 6 ist an dem Heck 7 und der rechten Seite 10 angeordnet, also an einem hinteren rechten Eckbereich. Die Anordnung der Sensoreinheiten 3, 4, 5, 6 ist vielfältig möglich und ist nicht auf die gezeigte Anordnung beschränkt. Gemäß dem Ausführungsbeispiel befindet sich die erste Sensoreinheit 3 somit an einer ersten Verbauposition 11, und die zweite Sensoreinheit 4 befindet sich an einer zweiten Verbauposition 12. Weiterhin befindet sich die dritte Sensoreinheit 5 an einer dritten Verbauposition 13, und die vierte Sensoreinheit 6 befindet sich an einer vierten Verbauposition 14.

Die erste Sensoreinheit 3 ist an eine erste Anschlussstelle 15 des Kommunikationssystems 2 angeschlossen. Die zweite Sensoreinheit 4 ist an eine zweite Anschlussstelle 16 des Kommunikationssystems 2 angeschlossen. Die dritte Sensoreinheit 5 ist an eine dritte Anschlussstelle 17 des Kommunikationssystems 2 angeschlossen. Die vierte Sensoreinheit 6 ist an eine vierte Anschlussstelle 18 des Kommunikationssystems 2 angeschlossen. Die Anordnung der Anschlussstellen 15, 16, 17, 18 ist gemäß dem Ausführungsbeispiel bei der jeweils angeschlossenen Sensoreinheit 3, 4, 5, 6 dargestellt. Die Anschlussstellen 15, 16, 17, 18 können aber vielfältig in dem Kraftfahrzeug 1 angeordnet sein.

Die Sensoreinheiten 3 bis 6 sind jeweils zum kompatiblen Anschluss an die Anschlussstellen 15 bis 18 ausgebildet. Dies bedeutet, dass eine Sensoreinheit, insbesondere sowohl Hardwaretechnisch als auch Softwaretechnisch, jeweils an jede der Anschlussstellen 15 bis 18 angeschlossen werden kann. Die Sensoreinheiten 3 bis 6 weisen keine Codierpins mehr auf.

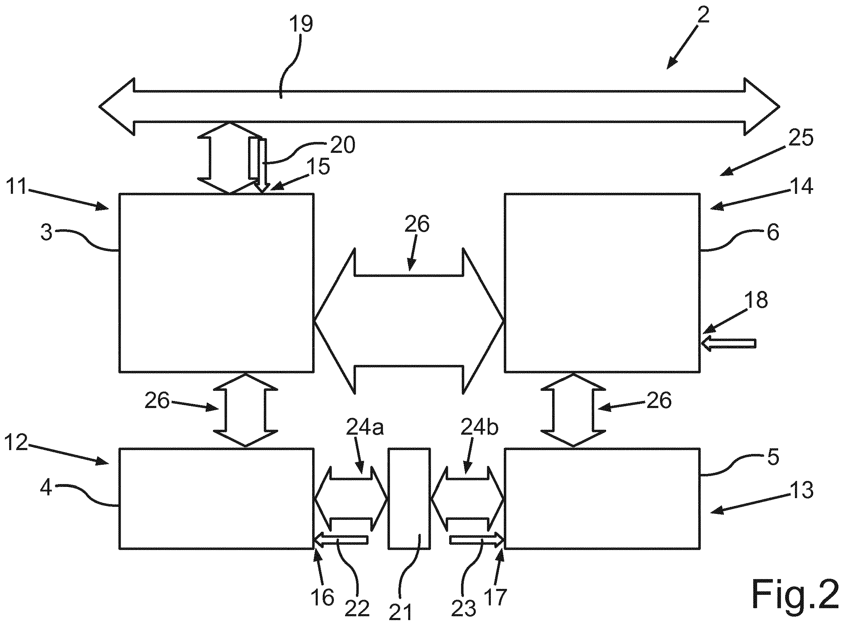

Fig. 2 zeigt ein Ausführungsbeispiel eines Kommunikationssystems 2. Das Kommunikationssystem 2 weist die erste Sensoreinheit 3, die zweite Sensoreinheit 4, die dritte Sensoreinheit 5 und die vierte Sensoreinheit 6 auf, wobei hier bereit der jeweils an Anschlussstellen angeschlossene Zustand der Sensoreinheiten 3 bis 6 gezeigt ist. Die erste Sensoreinheit 3 ist an der ersten Anschlussstelle 15 mit einem Hauptbus 19 des Kommunikationssystems 2 verbunden. Der Hauptbus 19 ist insbesondere als CAN-Bus ausgebildet. Als charakterisierende Information, damit die erste Sensoreinheit 3 ihre Verbauposition bestimmen kann, bekommt diese erste Sensoreinheit 3, insbesondere in einem Zeitfenster von wenigen Sekunden nach dem Anschließen, ein Hauptbussignal 20 des Hauptbusses 19 übermittelt. Insbesondere erfolgt diese Bestimmung der Verbauposition automatisch und unmittelbar nach dem Anschließen der Sensoreinheit 3 an der Anschlussstelle 15.

Das Hauptbussignal 20 wird an die erste Sensoreinheit 3 insbesondere in den ersten Sekunden nach dem Verbau und somit dem Anschluss an die Anschlussstelle 15 als die Verbauposition charakterisierende Information über den Fahrzeug-CAN beziehungsweise den Hauptbus 19 übermittelt.

Die zweite Sensoreinheit 4 ist an der zweiten Anschlussstelle 16 angeschlossen. Die zweite Anschlussstelle 16 hat keine direkte Verbindung zu dem Hauptbus 19. Insbesondere direkt mit der zweiten Anschlussstelle 16 ist im Ausführungsbeispiel ein Steuergerät 21 des Kommunikationssystems 2 verbunden. Das Steuergerät 21 kann als vielfältiges Steuergerät ausgebildet sein und kann vielfältig in dem Kraftfahrzeug 1 angeordnet sein. Im Ausführungsbeispiel wird von dem Steuergerät 21 an die zweite Anschlussstelle 16 ein erstes Signal 22 ausgegeben. Durch das erste Signal 22 bekommt die zweite Sensoreinheit 4, insbesondere in einem Zeitfenster von wenigen Sekunden, nach dem Verbau und somit dem Anschließen an die Anschlussstelle 16 eine die zweite Verbauposition 12 charakterisierende Information beziehungsweise eine definierte Botschaft, anhand welcher die Zuordnung zu der zweiten Verbauposition 12 erfolgen kann. Die die Verbauposition charakterisierende Information kann darin liegen, dass ein Signal von dem Steuergerät 21 erhalten wird, unabhängig davon, dass dieses Signal über den als Nebenbus eines Kommunikationssubsystems ausgebildeten CAN-L-Bus erhalten wird. Die die Verbauposition charakterisierende Information kann aber auch darin liegen, dass das Signal genau über den als Nebenbus eines Kommunikationssubsystems ausgebildeten CAN-L-Bus erhalten wird, und somit als ein CAN-L-Signal bereitgestellt wird, unabhängig davon ob es von dem Steuergerät 21 gesendet wird oder nicht.

Die dritte Sensoreinheit 5 ist an der dritten Anschlussstelle 17 angeschlossen. Die Zuordnung zu der dritten Verbauposition 13 erfolgt, indem als charakterisierende Information für die dritte Verbauposition 13 ein zweites Signal 23 an der dritten Anschlussstelle 17 durch das Steuergerät 21 bereitgestellt wird. Das zweite Signal 23 wird insbesondere als CAN-R-Signal bereitgestellt. So kann durch die dritte Sensoreinheit 5 anhand des zweiten Signals 23 bestimmt werden, an welcher Verbauposition die dritte Sensoreinheit 5 verbaut wird. Auch hier wird das zweite Signal insbesondere in einem Zeitfenster von wenigen Sekunden nach dem Verbau und somit dem Anschließen an die Anschlussstelle 17 bereitgestellt. Das Steuergerät 21 ist vorzugsweise direkt mit der dritten Anschlussstelle 17 verbunden. Die die Verbauposition charakterisierende Information kann auch hier darin liegen, dass ein Signal von dem Steuergerät 21 erhalten wird, unabhängig davon, dass dieses Signal über den als Nebenbus eines Kommunikationssubsystems ausgebildeten CAN-R-Bus erhalten wird. Die die Verbauposition charakterisierende Information kann aber auch darin liegen, dass das Signal genau über den als Nebenbus eines Kommunikationssubsystems ausgebildeten CAN-R-Bus erhalten wird, und somit als ein CAN-R-Signal bereitgestellt wird, unabhängig davon ob es von dem Steuergerät 21 gesendet wird oder nicht.

Das erste Signal 22 wird somit insbesondere von einem ersten Nebenbus 24a, dem CAN-L-Bus, des Kommunikationssystems 2 bereitgestellt. Das zweite Signal 23 wird insbesondere von einem zweiten Nebenbus 24b, dem CAN-R-Bus, des Kommunikationssystems 2 bereitgestellt. Der jeweilige Nebenbus 24a, 24b ist also beispielsweise als CAN-x-Bus ausgebildet.

Die vierte Sensoreinheit 6 kann der vierten Verbauposition 14 zugeordnet werden, da an der vierten Anschlussstelle 18 nach dem Anschließen der Sensoreinheit 6 für eine vorbestimmte Zeitspanne erfolglos auf ein Signal von dem Hauptbus 19 und ein Signal von einem sensorexternen bzw. sensorunabhängigen Steuergerät des Kommunikationssystems 2, beispielsweise dem Steuergerät 21, gewartet wird. Bekommt die vierte Sensoreinheit 6 also für die vorbestimmte Zeitspanne kein Signal von dem Hauptbus 19 und kein Signal von dem Steuergerät 21, so wird dies als die charakterisierende Information für die vierte Verbauposition 14 gewertet. Die vierte Sensoreinheit 6 kann also nach erfolglosem Verstreichen der vorbestimmten Zeitspanne davon ausgehen bzw. erkennt selbst, dass sie an der vierten Verbauposition 14 verbaut ist.

So wird an jeder der Anschlussstellen 15, 16, 17, 18 die jeweilige eindeutige charakterisierende Information für eine der Verbaupositionen 11, 12, 13, 14 bereitgestellt. Die charakterisierende Information für die erste Verbauposition 11 ist also insbesondere das Hauptbussignal 20. Die charakterisierende Information für die zweite Verbauposition 12 ist das erste Signal 22, insbesondere das CAN-L-Signal. Die charakterisierende Information für die dritte Verbauposition 13 ist das zweite Signal 23, insbesondere das CAN-R-Signal. Die charakterisierende Information für die vierte Verbauposition 14 ist das erfolglose Warten für die vorbestimmte Zeitspanne auf das Signal von dem Hauptbus 19 und das Signal von dem Steuergerät 21.

Die Sensoreinheiten 3, 4, 5, 6 sind des Weiteren in einem Kommunikationssubsystem 25 des Kommunikationssystems 2 zusammengefasst. Das bedeutet, dass die Sensoreinheiten 3 bis 6 in dem Kommunikationssubsystem 25 miteinander kommunizieren können. Dazu umfasst das Kommunikationssubsystem 25 die Nebenbusse 24a und 24b. Des Weiteren umfasst das Kommunikationssubsystem 25 einen weiteren Nebenbus 26. Mit dem weiteren Nebenbus 26 sind die Sensoreinheiten 5 und 6, sowie die Sensoreinheiten 3 und 4, als auch die Sensoreinheiten 3 und 6 jeweils direkt miteinander verbunden. Die zweite Sensoreinheit 4 und die dritte Sensoreinheit 5 sind in dem Kommunikationssubsystem 25 jeweils mit zwei verschiedenen Nebenbussen 24a und 26 sowie 24b und 26 verbunden.

Es können die zweite Sensoreinheit 4, die dritte Sensoreinheit 5 und die vierte Sensoreinheit 6 über den weiteren Nebenbus 26 mit der ersten Sensoreinheit 3 kommunizieren und somit auch insbesondere nur über die Sensoreinheit 3 indirekt mit dem Hauptbus 19 kommunizieren.

Der weitere Nebenbus 26 ist insbesondere als Flexray-Bus ausgebildet.

Es weisen die Sensoreinheiten 3, 4, 5, 6 vorzugsweise zumindest eine CAN-Schnittstelle und eine Flexray-Schnittstelle als Anschlüsse auf.

Die Sensoreinheiten 3, 4, 5, 6 sind vorzugsweise baugleich, insbesondere mit der gleichen Software, bereitgestellt. Nach dem Bestimmen der Verbauposition 11, 12, 13, 14 wird dann in der jeweiligen Sensoreinheit 3, 4, 5, 6 die jeweilige Konfigurationseinstellung für die konkrete Verbauposition 11, 12, 13, 14 eingestellt. Dadurch kann die jeweilige Sensoreinheit 3, 4, 5, 6 dann erfasste Sensordaten beispielsweise entsprechend der jeweiligen Verbauposition 11, 12, 13, 14 weiterverarbeiten. Durch das Vorhandensein der gleichen Software in den Sensoreinheiten 3, 4, 5, 6 können die Sensoreinheiten 3, 4, 5, 6 auch in einer anderen Verbauposition 11, 12, 13, 14 wieder eingebaut werden. Es kann dann erkannt werden, dass sich die jeweilige Sensoreinheit 3, 4, 5, 6 an einer anderen Verbauposition 11, 12, 13, 14 befindet als die Konfigurationseinstellung in der Steuereinheit 3, 4, 5, 6 dies vorgibt.

Die mit dem Hauptbus 19 direkt verbundene Sensoreinheit 3 stellt insbesondere eine Mastereinheit dar und die weiteren Sensoreinheiten 4 bis 6 stellen Slaveeinheiten in einem Master-Slave-System.

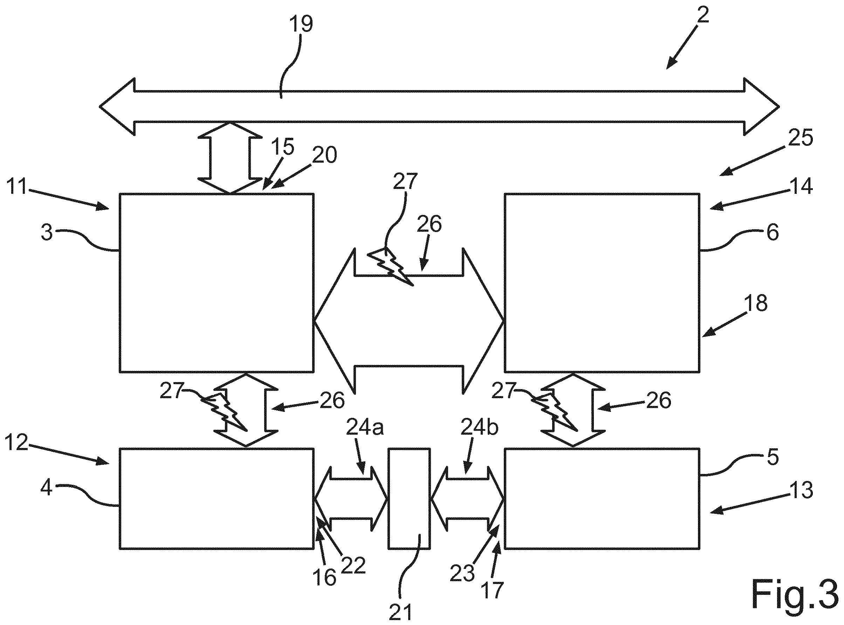

Fig. 3 zeugt beispielhaft die Situation, bei der die zweite Sensoreinheit 4, die dritte Sensoreinheit 5 und die vierte Sensoreinheit 6 defekt sind. Die hier als Slave arbeitenden Sensoreinheiten 4, 5, 6 liegen demnach also funktionsunfähig vor. Diese Funktionsunfähigkeit kann durch die erste Sensoreinheit 3, welche auch als Master vorliegt, erkannt werden, da der weitere Nebenbus 26 nicht hochgefahren werden kann. Es liegt also jeweils eine Störung 27 an dem weiteren Nebenbus 26 zwischen den Sensoreinheiten 3, 4, 5, 6 vor.

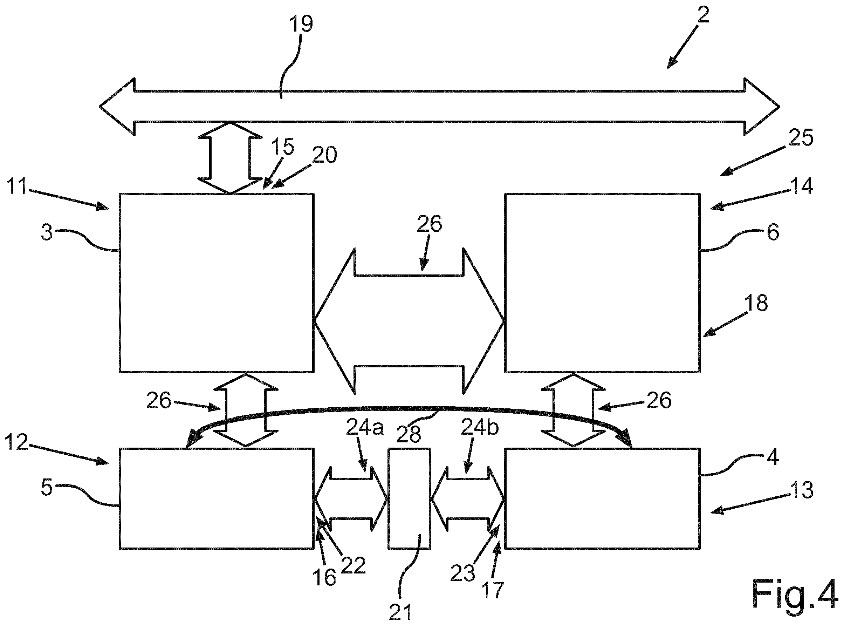

Fig. 4 zeigt das Vorliegen einer Vertauschung 28 der zweiten Sensoreinheit 4 und der dritten Sensoreinheit 5. So empfängt die zweite Sensoreinheit 4 also das zweite Signal 23, und die dritte Sensoreinheit 5 empfängt das erste Signal 22. Dies wird von der zweiten Sensoreinheit 4 und/oder der dritten Sensoreinheit 5 erkannt und der ersten Sensoreinheit 3 beziehungsweise dem Master des privaten Netzwerks beziehungsweise des Kommunikationssubsystems 25 mitgeteilt. Die Fehlerbehebung kann dann entweder durch ein Tauschen der zweiten Sensoreinheit 4 und der dritten Sensoreinheit 5 erfolgen oder aber mittels eines von der ersten Sensoreinheit 3 imitierten Vertauschens der Verbaucodierung, insbesondere in der Software. Dann agieren die zweite Sensoreinheit 4 und die dritte Sensoreinheit 5 beim nächsten Anschließen als der jeweilige Sensor, welcher für die jeweilige Verbauposition 11, 12, 13, 14 vorgesehen ist. Es werden die Konfigurationseinstellungen also dann dementsprechend geändert.

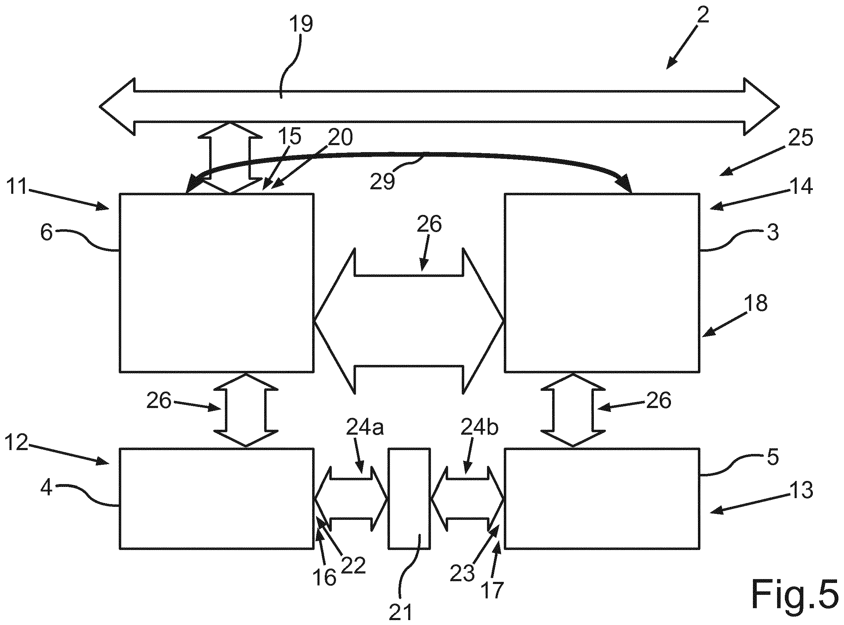

Fig. 5 zeigt eine Vertauschung 29 der ersten Sensoreinheit 3 und der vierten Sensoreinheit 6. In diesem Fall sind die Sensoreinheiten 3, 6 am Heck 7 des Kraftfahrzeugs 1 vertauscht. Die erste Sensoreinheit 3 empfängt in diesem Fall keine Daten auf der CAN-Schnittstelle, also von dem Hauptbus 19. So wird bei der ersten Sensoreinheit 3 ein sogenannter Bus-off-Fehler erzeugt. Die vierte Sensoreinheit 6 empfängt jedoch CAN-Daten, also insbesondere das Hauptbussignal 20, erwartet jedoch einen sogenannten Bus-off. Zur Fehlerbehebung wird nun der weitere Nebenbus 26, insbesondere der Flexray-Bus, in einem Applikationsmodus gestartet, und die Ergebnisse der internen Diagnose werden getauscht. Hat die erste Sensoreinheit 3 den Bus-off erkannt, und die vierte Sensoreinheit hat den Empfang der CAN-Daten, insbesondere des Hauptbussignals 20, erkannt, so kann die Vertauschung 29 als sicher erkannt eingestuft werden. Es kann dann eine Umprogrammierung der Sensorpositionscodierung erfolgen, indem die jeweilige Verbauposition 11, 12, 13, 14 in der jeweiligen Software entsprechend geändert wird.

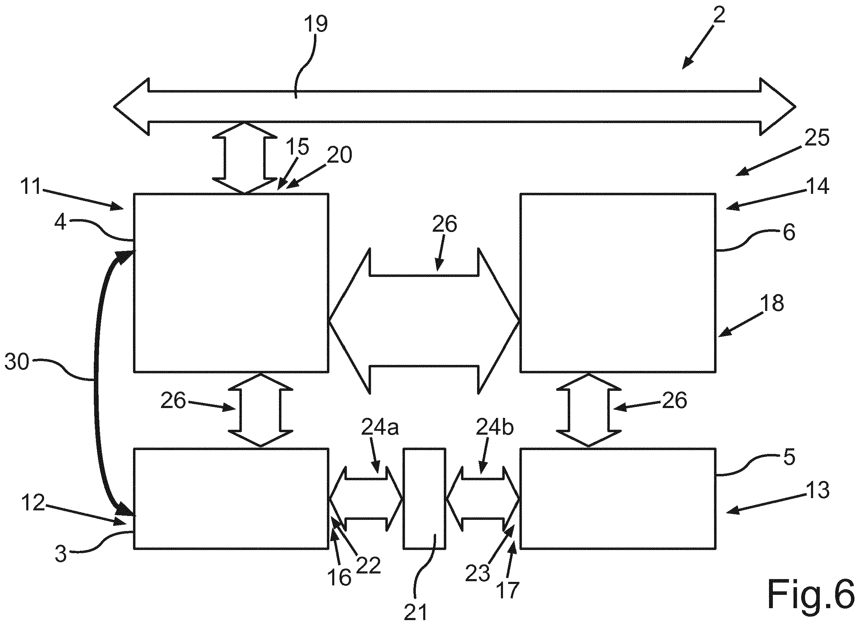

Fig. 6 zeigt eine Vertauschung 30 der ersten Sensoreinheit 3 und der zweiten Sensoreinheit 4. In diesem Fall sind die Sensoreinheiten 3, 4 auf der linken Seite 8 vertauscht. Die erste Sensoreinheit 3 beziehungsweise der Master empfängt dann keine für ihn relevanten Daten auf dem CAN-Interface, also er empfängt nicht das Hauptbussignal 20, da er an den ersten Nebenbus 24a, insbesondere dem CAN-L-Bus, angeschlossen ist. Die zweite Sensoreinheit 4 empfängt hingegen die Daten des Hauptbusses 19, erwartet jedoch die Daten des ersten Nebenbusses 24a. Zur Fehlerbehebung wird nun der weitere Nebenbus 26 im Applikationsmodus gestartet und die Ergebnisse der internen Diagnose ausgetauscht. Hat die erste Sensoreinheit 3 das erste Signal 22 erkannt und die zweite Sensoreinheit 4 den Empfang des Hauptbussignals 20 erkannt, so ist die Vertauschung 30 als sicher erkannt einzustufen, und es kann eine Umprogrammierung der Sensorpositionscodierung erfolgen.

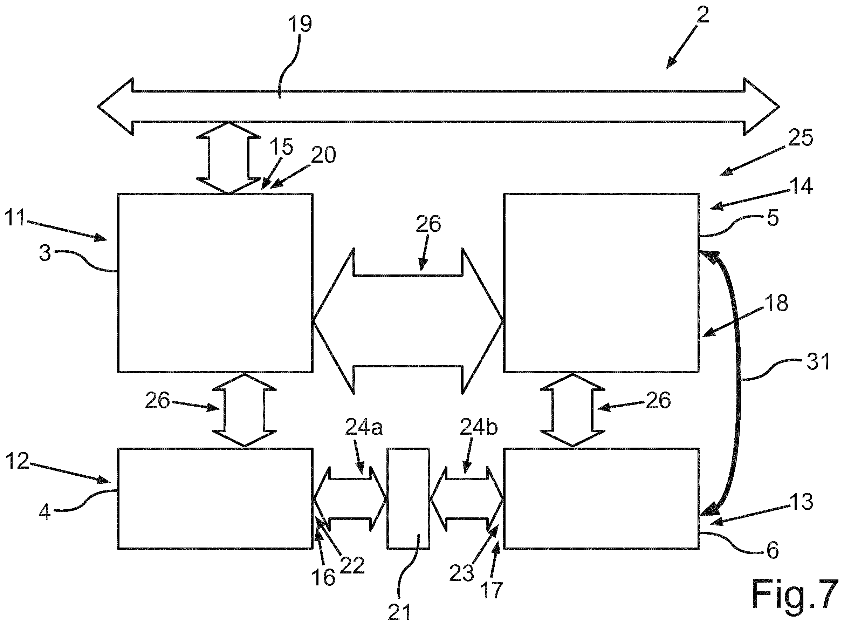

Fig. 7 zeigt eine Vertauschung 31 zwischen der dritten Sensoreinheit 5 und der vierten Sensoreinheit 6. Es sind also die Sensoreinheiten 5, 6 auf der rechten Seite 10 vertauscht. Die dritte Sensoreinheit 5, welche nun an der vierten Anschlussstelle 18 angeschlossen ist, empfängt nun keine Daten auf dem CAN-Interface beziehungsweise empfängt kein Signal des Nebenbusses 24a, 24b. Die vierte Sensoreinheit 6 hingegen erwartet den Bus-off beziehungsweise das erfolglose Warten auf ein Signal von dem Hauptbus 19 und ein Signal von dem Steuergerät 21. Zur Fehlerbehebung wird nun der weitere Nebenbus 26 im Applikationsmodus gestartet und die Ergebnisse der internen Diagnose ausgetauscht. Die Vertauschung 31 kann anhand des oben genannten Verhaltens sicher erkannt werden und es kann entweder eine Umprogrammierung der Sensorpositionscodierung für die jeweilige Verbauposition 11, 12, 13, 14 erfolgen oder aber es kann ein DTC (Diagnostic Trouble Code) beziehungsweise ein Fehlerhinweis eingetragen werden, um das Verhalten durch ein erneutes Tauschen der Sensoreinheiten 5, 6 zu beheben.

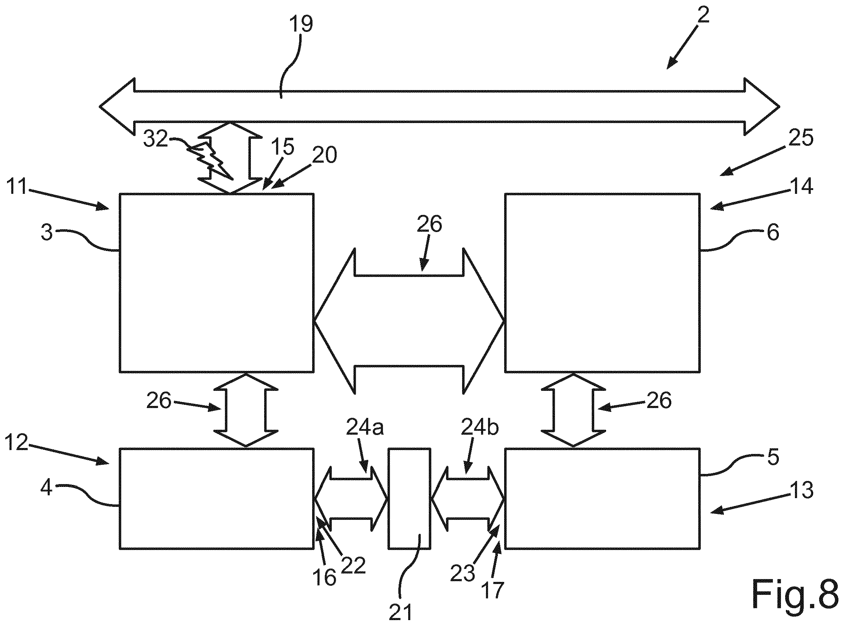

Fig. 8 zeigt einen Defekt 32 der ersten Sensoreinheit 3. Ist die erste Sensoreinheit 3 beziehungsweise der Master defekt, so kann keine Eigendiagnose des Kommunikationssubsystems 25 erfolgen. Dies bedeutet, dass ein weiteres Steuergerät des Kommunikationssystems 2 am Hauptbus 19 den Ausfall der ersten Sensoreinheit 3 erkennt und den entsprechenden DTC beziehungsweise den Fehlerhinweis einträgt.

Das Bestimmen der Verbauposition 11, 12, 13, 14 kann auch hier nun wie folgt ablaufen. Das Kommunikationssystem 2 wird in dem Kraftfahrzeug 1 verbaut. Die Sensoreinheiten 3, 4, 5, 6 werden verkabelt. Es erfolgt eine erstmalige Inbetriebnahme durch Bestromung der Sensoreinheiten 3, 4, 5, 6. Die Sensoreinheiten 3, 4, 5, 6 erkennen, dass noch kein Verbaupositionseintrag beziehungsweise eine Konfigurationseinstellung im nicht flüchtigen Speicher der jeweiligen Sensoreinheit 3, 4, 5, 6 vorhanden ist. Der Softwarefluss verbleibt in einer speziellen Identifizierungsprozedur zum Bestimmen der Verbauposition. Partnersteuergeräte des Kommunikationssystems 2 beziehungsweise das Steuergerät 21 werden ebenfalls bestromt und senden jeweils eine eindeutige, zur Identifizierung nutzbare Botschaft, insbesondere das erste Signal 22 und das zweite Signal 23, an die zweite Anschlussstelle 16 und die dritte Anschlussstelle 17. Die vierte Sensoreinheit 6 ohne Anbindung an ein Partnersteuergerät beziehungsweise das Steuergerät 21 erkennt einen Time-out beziehungsweise wartet erfolglos für die vorbestimmte Zeitspanne auf das Hauptbussignal 20 und das erste Signal 22 oder das zweite Signal 23. Es trägt somit aufgrund dessen die vierte Verbauposition 14 in dem nicht flüchtigen Speicher ein. Dann wird das gesamte Kommunikationssystem 2, zumindest das Kommunikationssubsystem 25, neu gestartet. Es erfolgt der erste Hochlaufvorgang ohne das Bestimmen der Verbauposition. Die Sensoreinheiten 3, 4, 5, 6 konfigurieren sich aufgrund der Verbaupositionsinformation beziehungsweise der Konfigurationseinstellung korrekt als Master und Slaves. Weiterhin wird die private Buskommunikation, also der weitere Nebenbus 26, insbesondere der Flexray-Bus, gestartet. Es erfolgt ein Abgleich der Verbaupositionen 11, 12, 13 14 durch eine Handshaking-Prozedur, bei der die Slavesensoreinheiten beziehungsweise die zweite Sensoreinheit 4, die dritte Sensoreinheit 5 und die vierte Sensoreinheit 6 der ersten Sensoreinheit 3 beziehungsweise dem Master ihre Verbaukennung mitteilen. Wird durch die erste Sensoreinheit 3 die korrekte Konfiguration erkannt, so kann ein normaler Betriebsmodus der Sensoreinheiten 3, 4, 5, 6 ausgeführt werden. Wird durch die erste Sensoreinheit 3 beziehungsweise den Master aber beispielsweise erkannt, dass eine der Verbaupositionen 11, 12, 13, 14 doppelt vorkommt, so wird beispielsweise eine Fehlermeldung auf dem Hauptbus 19 ausgegeben. Es kann dann beispielsweise nachgearbeitet werden, um beispielsweise einen locker sitzenden Stecker in dem Kommunikationssubsystem 25 festzudrücken. Ist die Nacharbeit erfolgt, so kann das Bestimmen anhand des erfindungsgemäßen Verfahrens per Diagnosedienst neu gestartet werden.

Durch das Kommunikationssubsystem 25 wird also ein privates Kommunikationsnetz aufgebaut, welches über die erste Sensoreinheit 3 an den Hauptbus 19 angebunden ist. In dem Kommunikationssubsystem 25 liegen die zweite Sensoreinheit 4, die dritte Sensoreinheit 5 und die vierte Sensoreinheit 6 als Slaves vor, während die erste Sensoreinheit 3 als Master agiert. Das Bestimmen der jeweiligen Verbauposition 11, 12, 13, 14 wird durch die Topologie des Kommunikationssubsystems 25 ermöglicht.

## Patentansprüche

1. Verfahren zum Bestimmen einer Verbauposition (11, 12, 13, 14) zumindest einer Sensoreinheit (3, 4, 5, 6), welche zum Erfassen eines Umgebungsbereichs (33) eines Kraftfahrzeugs (1) ausgebildet ist, eines Kommunikationssystems (2) des Kraftfahrzeugs (1), bei welchem die Sensoreinheit (3, 4, 5, 6) mit einer Anschlussstelle (15, 16, 17, 18) des Kommunikationssystems (2) des Kraftfahrzeugs (1) verbunden wird,
wobei das Kommunikationssystem (2) mit der eine erste Verbauposition (11) charakterisierenden ersten Anschlussstelle (15) für die Sensoreinheit (3, 4, 5, 6) und mit zumindest einer eine weitere Verbauposition (12, 13, 14) charakterisierenden weiteren Anschlussstelle (16, 17, 18) für die Sensoreinheit (3, 4, 5, 6) ausgebildet wird, wobei die Sensoreinheit (3, 4, 5, 6) kompatibel an die erste Anschlussstelle (15) oder die weitere Anschlussstelle (16, 17, 18) angeschlossen werden kann,
**dadurch gekennzeichnet, dass** die erste Anschlussstelle (15) mit einem Hauptbus (19) des Kommunikationssystems (2) direkt verbunden wird, und als eine weitere Anschlussstelle (16, 17, 18) eine zweite Anschlussstelle (16) ohne direkte Verbindung zu einem Hauptbus (19) des Kommunikationssystems (2) vorgegeben wird, wobei die Sensoreinheit (3, 4, 5, 6) an der zweiten Anschlussstelle (16) durch einen Nebenbus mit einem Steuergerät (21) des Kommunikationssystems (2) verbunden wird,
wobei abhängig davon, an welcher Anschlussstelle (15, 16, 17, 18) die Sensoreinheit angeschlossen wird, wird der Sensoreinheit (3, 4, 5, 6) automatisch eine diese konkrete Verbauposition (11, 12, 13, 14) charakterisierende Information durch das Kommunikationssystem (2) bereitgestellt, wobei als charakterisierende Information der ersten Verbauposition (11) ein Hauptbussignal (20) an die an die erste Anschlussstelle (15) angeschlossene Sensoreinheit (3) übermittelt wird, und als charakterisierende Information einer zweiten Verbauposition (12) ein erstes Signal (22) des Steuergeräts (21) des Kommunikationssystems (2) an die angeschlossene Sensoreinheit (4) übermittelt wird, wobei das erste Signal (22) über den von dem Hauptbus (19) unterschiedlichen Nebenbus (24a, 24b) des Kommunikationssystems übermittelt wird,
und wobei eine Zuordnung der die konkrete Verbauposition (11, 12, 13, 14) charakterisierende Information zum Identifizieren der konkreten Verbauposition (11, 12, 13, 14) durch die Sensoreinheit (3, 4, 5, 6) durchgeführt wird.

2. Verfahren nach Anspruch 1,
**dadurch gekennzeichnet, dass**
durch die Sensoreinheit (3, 4, 5, 6) nach dem Einschalten der Sensoreinheit (3, 4, 5, 6) überprüft wird, ob bereits eine Konfigurationseinstellung innerhalb der Sensoreinheit (3, 4, 5, 6) für die jeweilige Verbauposition (11, 12, 13, 14) vorhanden ist, und falls die Konfigurationseinstellung vorhanden ist, das Bestimmen der Verbauposition (11, 12, 13, 14) bei dem Einschaltvorgang übersprungen wird.

3. Verfahren nach einem der vorhergehenden Ansprüche,
**dadurch gekennzeichnet, dass**
als eine weitere Anschlussstelle (16, 17, 18) eine dritte Anschlussstelle (17) ohne direkte Verbindung zu einem Hauptbus (19) des Kommunikationssystems (2) vorgegeben wird, und als charakterisierende Information einer dritten Verbauposition (13) ein zweites Signal (23) des Steuergeräts (21) des Kommunikationssystems (2) an die angeschlossene Sensoreinheit (5) übermittelt wird.

4. Verfahren nach Anspruch 3,
**dadurch gekennzeichnet, dass**
das zweite Signal (23) über einen von dem Hauptbus (19) unterschiedlichen Nebenbus (24a, 24b) des Kommunikationssystems (2) übermittelt wird.

5. Verfahren nach einem der vorhergehenden Ansprüche,
**dadurch gekennzeichnet, dass**
zum Bestimmen der zweiten Verbauposition (12) als charakterisierende Information das erste Signal (22) durch die Sensoreinheit (4) erhalten wird, welches über den von dem Hauptbus (19) unterschiedlichen ersten Nebenbus (24a) des Kommunikationssystems (2) bereitgestellt wird, mit welchem die Sensoreinheit (4) direkt verbunden wird.

6. Verfahren nach einem der vorhergehenden Ansprüche,
**dadurch gekennzeichnet, dass**
zum Bestimmen einer dritten Verbauposition (13) als charakterisierende Information ein Signal (23) durch die Sensoreinheit (5) erhalten wird, welches über einen von dem Hauptbus (19) unterschiedlichen zweiten Nebenbus (24b) des Kommunikationssystems (2) bereitgestellt wird, mit welchem die Sensoreinheit (5) direkt verbunden wird.

7. Verfahren nach einem der vorhergehenden Ansprüche,
**dadurch gekennzeichnet, dass**
als eine weitere Anschlussstelle (16, 17, 18) eine vierte Anschlussstelle (18) ohne direkte Verbindung zu einem Hauptbus (19) des Kommunikationssystems (2) bereitgestellt wird, und als bereitgestellte charakterisierende Information einer vierten Verbauposition (14) durch die Sensoreinheit (6) für eine vorbestimmte Zeitspanne erfolglos auf ein Signal von dem Hauptbus (19) und ein Signal (22, 23) von einem Steuergerät (21) des Kommunikationssystems (2) gewartet wird.

8. Verfahren nach einem der vorhergehenden Ansprüche,
**dadurch gekennzeichnet, dass**
zumindest zwei Sensoreinheiten (3, 4, 5, 6) in einem Kommunikationssubsystem (25) des Kommunikationssystems (2) über einen weiteren Nebenbus (26), insbesondere einen FlexRay-Bus, direkt miteinander kommunizieren, insbesondere vier Sensoreinheiten (3, 4, 5, 6) in dem Kommunikationssubsystem (25) angeschlossen werden, die jeweils zumindest paarweise mit jeweils einem weiteren Nebenbus (26) direkt verbunden sind und über den jeweiligen weiteren Nebenbus (26) kommunizieren.

9. Verfahren nach einem der vorhergehenden Ansprüche,
**dadurch gekennzeichnet, dass**
das Bestimmen der Verbauposition (11, 12, 13, 14) erneut durchgeführt wird, falls die Sensoreinheit (3, 4, 5, 6) aus einer spezifischen Verbauposition (11, 12, 13, 14) ausgebaut wird und nachfolgend wieder in eine Verbauposition (11, 12, 13, 14) eingebaut wird oder eine neue Sensoreinheit in eine Verbauposition (11, 12, 13, 14) verbaut wird.

10. Verfahren nach einem der vorhergehenden Ansprüche, **dadurch gekennzeichnet, dass** der Hauptbus (19) ein Haupt-CAN-Bus ist.

11. Verfahren nach einem der vorhergehenden Ansprüche, **dadurch gekennzeichnet, dass** die Sensoreinheit (3, 4, 5, 6) kompatibel an die alternativ zur Verfügung stehenden erste Anschlussstelle (15) oder die weitere Anschlussstelle (16, 17, 18) angeschlossen werden kann.

12. Kommunikationssystem (2) für ein Kraftfahrzeug (1), mit zumindest einer Sensoreinheit (3, 4, 5, 6), welche zum Erfassen eines Umgebungsbereichs (33) des Kraftfahrzeugs (1) ausgebildet ist, wobei das Kommunikationssystem (2) mit der eine erste Verbauposition (11) charakterisierenden ersten Anschlussstelle (15) für die Sensoreinheit (3, 4, 5, 6) und mit zumindest einer eine weitere Verbauposition (12, 13, 14) charakterisierenden weiteren Anschlussstelle (16, 17, 18) für die Sensoreinheit (3, 4, 5, 6) ausgebildet ist, und die Sensoreinheit (3, 4, 5, 6) kompatibel an die erste Anschlussstelle (15) oder die weitere Anschlussstelle (16, 17, 18) anschließbar ist, und das Kommunikationssystem (2) dazu ausgebildet ist, eine Verbauposition (11, 12, 13, 14) der zumindest einen Sensoreinheit (3, 4, 5, 6) nach einem Verfahren gemäß einem der vorhergehenden Ansprüche zu bestimmen.

13. Kommunikationssystem (2) nach Anspruch 12,
**dadurch gekennzeichnet, dass**
die jeweilige Sensoreinheit (3, 4, 5, 6) einen Sensor, insbesondere einen Radarsensor, und eine korrespondierende Steuereinheit umfasst.

14. Kraftfahrzeug (1) mit einem Kommunikationssystem (2) nach Anspruch 12 oder 13.

## Claims

1. Method for determining an installation position (11, 12, 13, 14) of at least one sensor unit (3, 4, 5, 6), which is designed to cover a surrounding area (33) of a motor vehicle (1), of a communication system (2) of the motor vehicle (1), in which the sensor unit (3, 4, 5, 6) is connected to a connecting point (15, 16, 17, 18) of the communication system (2) of the motor vehicle (1),
wherein the communication system (2) is designed with the first connecting point (15) for the sensor unit (3, 4, 5, 6), which first connecting point characterizes a first installation position (11), and with at least one further connecting point (16, 17, 18) for the sensor unit (3, 4, 5, 6), which further connecting point characterizes a further installation position (12, 13, 14), the sensor unit (3, 4, 5, 6) being able to be connected to the first connecting point (15) or to the further connecting point (16, 17, 18) in a compatible manner,
**characterized in that** the first connecting point (15) is directly connected to a main bus (19) of the communication system (2), and a second connecting point (16) without a direct connection to a main bus (19) of the communication system (2) is predefined as a further connecting point (16, 17, 18), the sensor unit (3, 4, 5, 6) being connected to a control unit (21) of the communication system (2) at the second connecting point (16) by way of a subsidiary bus,
wherein, depending on the connecting point (15, 16, 17, 18) at which the sensor unit is connected, the sensor unit (3, 4, 5, 6) is automatically provided with information characterizing this specific installation position (11, 12, 13, 14) by the communication system (2), a main bus signal (20) being transmitted to the sensor unit (3) connected to the first connecting point (15) as characterizing information for the first installation position (11), and a first signal (22) from the control unit (21) of the communication system (2) being transmitted to the connected sensor unit (4) as characterizing information for a second installation position (12), the first signal (22) being transmitted via the subsidiary bus (24a, 24b) of the communication system, which is different from the main bus (19),
and wherein an association for the information characterizing the specific installation position (11, 12, 13, 14) is made by the sensor unit (3, 4, 5, 6) in order to identify the specific installation position (11, 12, 13, 14).

2. Method according to Claim 1,
**characterized in that**
after the sensor unit (3, 4, 5, 6) is switched on the sensor unit (3, 4, 5, 6) checks whether there is already a configuration setting within the sensor unit (3, 4, 5, 6) for the respective installation position (11, 12, 13, 14), and if the configuration setting exists then determination of the installation position (11, 12, 13, 14) is skipped during the switching-on process.

3. Method according to either of the preceding claims,
**characterized in that**
a third connecting point (17) without a direct connection to a main bus (19) of the communication system (2) is predefined as a further connecting point (16, 17, 18), and a second signal (23) from the control unit (21) of the communication system (2) is transmitted to the connected sensor unit (5) as characterizing information for a third installation position (13) .

4. Method according to Claim 3,
**characterized in that**
the second signal (23) is transmitted via a subsidiary bus (24a, 24b) of the communication system (2), which is different from the main bus (19).

5. Method according to one of the preceding claims,
**characterized in that**
in order to determine the second installation position (12) the characterizing information obtained by the sensor unit (4) is the first signal (22), which is provided via the first subsidiary bus (24a) of the communication system (2), which is different from the main bus (19) and to which the sensor unit (4) is directly connected.

6. Method according to one of the preceding claims,
**characterized in that**
in order to determine a third installation position (13) the characterizing information obtained by the sensor unit (5) is a signal (23) that is provided via a second subsidiary bus (24b) of the communication system (2), which is different from the main bus (19) and to which the sensor unit (5) is directly connected.

7. Method according to one of the preceding claims,
**characterized in that**
a fourth connecting point (18) without a direct connection to a main bus (19) of the communication system (2) is provided as a further connecting point (16, 17, 18), and the sensor unit (6) unsuccessfully awaits a signal from the main bus (19) and a signal (22, 23) from a control unit (21) of the communication system (2) for a predetermined length of time as provided characterizing information for a fourth installation position (14).

8. Method according to one of the preceding claims,
**characterized in that**
at least two sensor units (3, 4, 5, 6) directly communicate with one another in a communication subsystem (25) of the communication system (2) via a further subsidiary bus (26), in particular a FlexRay bus, in particular four sensor units (3, 4, 5, 6) are connected in the communication subsystem (25), each of said sensor units being directly connected, at least in pairs, to a particular further subsidiary bus (26) and communicating via the respective further subsidiary bus (26) .

9. Method according to one of the preceding claims,
**characterized in that**
the installation position (11, 12, 13, 14) is redetermined if the sensor unit (3, 4, 5, 6) is removed from a specific installation position (11, 12, 13, 14) and is subsequently fitted in an installation position (11, 12, 13, 14) again or a new sensor unit is installed in an installation position (11, 12, 13, 14).

10. Method according to one of the preceding claims, **characterized in that** the main bus (19) is a main CAN bus.

11. Method according to one of the preceding claims, **characterized in that** the sensor unit (3, 4, 5, 6) may be connected to the alternatively available first connecting point (15) or to the further connecting point (16, 17, 18) in a compatible manner.

12. Communication system (2) for a motor vehicle (1), having at least one sensor unit (3, 4, 5, 6), which is designed to cover a surrounding area (33) of the motor vehicle (1), wherein the communication system (2) is designed with the first connecting point (15) for the sensor unit (3, 4, 5, 6), which first connecting point characterizes a first installation position (11), and with at least one further connecting point (16, 17, 18) for the sensor unit (3, 4, 5, 6), which further connecting point characterizes a further installation position (12, 13, 14), and the sensor unit (3, 4, 5, 6) is able to be connected to the first connecting point (15) or to the further connecting point (16, 17, 18) in a compatible manner, and the communication system (2) is designed to determine an installation position (11, 12, 13, 14) of the at least one sensor unit (3, 4, 5, 6) using a method according to one of the preceding claims.

13. Communication system (2) according to Claim 12,
**characterized in that**
the respective sensor unit (3, 4, 5, 6) comprises a sensor, in particular a radar sensor, and a corresponding control unit.

14. Motor vehicle (1) having a communication system (2) according to Claim 12 or 13.

## Revendications

1. Procédé permettant de déterminer une position d'installation (11, 12, 13, 14) d'au moins une unité de capteur (3, 4, 5, 6), qui est réalisée pour détecter une zone environnante (33) d'un véhicule automobile (1), d'un système de communication (2) du véhicule automobile (1), dans lequel l'unité de capteur (3, 4, 5, 6) est reliée à un point de raccordement (15, 16, 17, 18) du système de communication (2) du véhicule automobile (1),
le système de communication (2) étant réalisé avec le premier point de raccordement (15) caractérisant une première position d'installation (11) pour l'unité de capteur (3, 4, 5, 6) et avec au moins un autre point de raccordement (16, 17, 18) caractérisant une autre position d'installation (12, 13, 14) pour l'unité de capteur (3, 4, 5, 6), l'unité de capteur (3, 4, 5, 6) pouvant être raccordée de manière compatible au premier point de raccordement (15) ou à l'autre point de raccordement (16, 17, 18),
**caractérisé en ce que** le premier point de raccordement (15) est relié directement à un bus primaire (19) du système de communication (2), et un deuxième point de raccordement (16) sans liaison directe avec un bus primaire (19) du système de communications (2) est prédéfini comme un autre point de raccordement (16, 17, 18), l'unité de capteur (3, 4, 5, 6) étant reliée au deuxième point de raccordement (16) à un appareil de commande (21) du système de communication (2) par un bus secondaire,
dans lequel, en fonction du point de raccordement (15, 16, 17, 18) auquel est raccordée l'unité de capteur, une information caractérisant cette position d'installation (11, 12, 13, 14) concrète est fournie automatiquement à l'unité de capteur (3, 4, 5, 6) par le système de communication (2), dans lequel, comme information caractérisante de la première position d'installation (11), un signal de bus primaire (20) est transmis à l'unité de capteur (3) raccordée au premier point de raccordement (15), et comme information caractérisante d'une deuxième position d'installation (12), un premier signal (22) de l'appareil de commande (21) du système de communication (2) est transmis à l'unité de capteur (4) raccordée, le premier signal (22) étant transmis par le bus secondaire (24a, 24b) différent du bus primaire (19) du système de communication,
et dans lequel une association de l'information caractérisant la position d'installation (11, 12, 13, 14) concrète est effectuée pour identifier la position d'installation (11, 12, 13, 14) concrète par l'unité de capteur (3, 4, 5, 6) .

2. Procédé selon la revendication 1, **caractérisé en ce que** l'unité de capteur (3, 4, 5, 6) vérifie après la mise en marche de l'unité de capteur (3, 4, 5, 6) si un réglage de configuration existe déjà à l'intérieur de l'unité de capteur (3, 4, 5, 6) pour la position d'installation (11, 12, 13, 14) respective, et si le réglage de configuration existe, la détermination de la position d'installation (11, 12, 13, 14) est ignorée lors de l'opération de mise en marche.

3. Procédé selon l'une quelconque des revendications précédentes, **caractérisé en ce qu'**un troisième point de raccordement (17) sans liaison directe avec un bus primaire (19) du système de communication (2) est prédéfini comme un autre point de raccordement (16, 17, 18), et comme information caractérisante d'une troisième position d'installation (13), un deuxième signal (23) de l'appareil de commande (21) du système de communication (2) est transmis à l'unité de capteur (5) raccordée.

4. Procédé selon la revendication 3, **caractérisé en ce que** le deuxième signal (23) est transmis par un bus secondaire (24a, 24b), différent du bus primaire (19), du système de communication (2).

5. Procédé selon l'une quelconque des revendications précédentes, **caractérisé en ce que** pour la détermination de la deuxième position d'installation (12), l'unité de capteur (4) reçoit comme information caractérisante le premier signal (22) qui est fourni par le premier bus secondaire (24a), différent du bus primaire (19), du système de communication (2) auquel l'unité de capteur (4) est reliée directement.

6. Procédé selon l'une quelconque des revendications précédentes, **caractérisé en ce que** pour la détermination d'une troisième position d'installation (13), l'unité de capteur (5) obtient comme information caractérisante un signal (23) qui est fourni par un deuxième bus secondaire (24b), différent du bus primaire (19), du système de communication (2) auquel l'unité de capteur (5) est reliée directement.

7. Procédé selon l'une quelconque des revendications précédentes, **caractérisé en ce qu'**un quatrième point de raccordement (18) sans liaison directe avec un bus primaire (19) du système de communication (2) est fourni comme un autre point de raccordement (16, 17, 18), et comme information caractérisante fournie d'une quatrième position d'installation (14), l'unité de capteur (6) attend en vain pendant une période prédéterminée un signal du bus primaire (19) et un signal (22, 23) d'un appareil de commande (21) du système de communication (2).

8. Procédé selon l'une quelconque des revendications précédentes, **caractérisé en ce qu'**au moins deux unités de capteur (3, 4, 5, 6) dans un sous-système de communication (25) du système de communication (2) communiquent directement ensemble par un autre bus secondaire (26), en particulier un bus FlexRay, en particulier quatre unités de capteur (3, 4, 5, 6) sont raccordées dans le sous-système de communication (25) qui sont respectivement reliées directement au moins par paires à respectivement un autre bus secondaire (26) et communiquent par l'autre bus secondaire (26) respectif.

9. Procédé selon l'une quelconque des revendications précédentes, **caractérisé en ce que** la détermination de la position d'installation (11, 12, 13, 14) est effectuée à nouveau si l'unité de capteur (3, 4, 5, 6) est désinstallée d'une position d'installation (11, 12, 13, 14) spécifique et est par la suite réinstallée dans une position d'installation (11, 12, 13, 14), ou une nouvelle unité de capteur est installée dans une position d'installation (11, 12, 13, 14).

10. Procédé selon l'une quelconque des revendications précédentes, **caractérisé en ce que** le bus primaire (19) est un bus CAN primaire.

11. Procédé selon l'une quelconque des revendications précédentes, **caractérisé en ce que** l'unité de capteur (3, 4, 5, 6) peut être raccordée de manière compatible au premier point de raccordement (15) ou à l'autre point de raccordement (16, 17, 18), disponibles en variante.

12. Système de communication (2) pour un véhicule automobile (1), comprenant au moins une unité de capteur (3, 4, 5, 6) qui est réalisée pour détecter une zone environnante (33) du véhicule automobile (1), le système de communication (2) étant réalisé avec le premier point de raccordement (15) caractérisant une première position d'installation (11) pour l'unité de capteur (3, 4, 5, 6) et avec au moins un autre point de raccordement (16, 17, 18) caractérisant une autre position d'installation (12, 13, 14) pour l'unité de capteur (3, 4, 5, 6), et l'unité de capteur (3, 4, 5, 6) peut être raccordée de manière compatible au premier point de raccordement (15) ou à l'autre point de raccordement (16, 17, 18), et le système de communication (2) est réalisé pour déterminer une position d'installation (11, 12, 13, 14) de ladite au moins une unité de capteur (3, 4, 5, 6) selon un procédé selon l'une quelconque des revendications précédentes.

13. Système de communication (2) selon la revendication 12, **caractérisé en ce que** l'unité de capteur (3, 4, 5, 6) respective comprend un capteur, en particulier un capteur radar, et une unité de commande correspondante.

14. Véhicule automobile (1) comprenant un système de communication (2) selon la revendication 12 ou 13.
